# EUROPÄISCHE PATENTSCHRIFT

(11) **EP 1 036 496 B1**
(45) Veröffentlichungstag und Bekanntmachung des Hinweises auf die Patenterteilung: **07.01.2004**
(21) Anmeldenummer: 00105656.3
(22) Anmeldetag: 17.03.2000
(51) Int. Cl.: A01G 9/14

(54) **Bauteilset zum Bau eines Gewächshauses**
Set of elements for building a greenhouse
Ensemble de pièces pour construire une serre

(30) Priorität: 18.03.1999 DE 19912143
(43) Veröffentlichungstag der Anmeldung: 20.09.2000
(73) Patentinhaber: Hans Einhell AG, 94405 Landau/Isar (DE)
(72) Erfinder: Prösch, Georg, 54411 Hermeskeil (DE)
(74) Vertreter: Wallinger, Michael, Dr.-Ing.

(56) Entgegenhaltungen:
- FR-A- 2 675 548
- US-A- 4 201 019

## Beschreibung

Die Erfindung betrifft ein Bauteilset zum Bau eines Gewächshauses aus Profilelementen, die zu einem Gerüst verbindbar sind, und transparenten Platten, die in das Gerüst einsetzbar sind.

Aus dem Stand der Technik sind Bauteilsets zum Bau von Gewächshäusern bekannt, die im wesentlichen aus einem Satteldach, einer Vorderwand, einer Rückwand und zwei Seitenwänden bestehen. Aus der Druckschrift US-A-4 201 019 ist ein solches Bauteilset bekannt. Die Wände und das Dach der bekannten Gewächshäuser werden von transparenten Platten, vorzugsweise Hohlkammerplatten aus Kunststoff, gebildet, die in ein Gerüst einsetzbar sind. Das Gerüst setzt sich aus verschiedenen leistenförmigen Profilelementen zusammen, die entweder über Schraubverbindungen miteinander verbunden werden oder auf Grund ihres Profils ineinandersteckbar sind. Die wesentlichen Profilelemente sind die Profilelemente für die Kanten des Satteldachs und für die Kanten des quaderförmigen Unterbaus. Weitere Profilelemente dienen dem Anbau von Fenstern, Türen und sonstigen Öffnungen im Gewächshaus oder auch einer Versteifung des Gerüstes z. B. durch Streben.

Den aus dem Stand der Technik bekannten Gewächshäusern ist gemein, daß sie in einer festen Größe, insbesondere in einer festen Länge, angeboten werden. Der Gärtner hat keine Möglichkeit, die Abmaße des Gewächshauses, insbesondere dessen Länge zu verändern.

Des weiteren erweist sich die Montage der bekannten Gewächshäuser als problematisch. Bei der Verbindung der Profilelemente, insbesondere in den Ecken des Gerüstes, ist eine genaue Ausrichtung der Profilelemente zueinander erforderlich, damit das Gewächshaus keine Schieflage einnimmt. So ist z. B. in einer bodenseitigen Ecke des Gerüstes ein rechter Winkel zwischen drei Profilelementen erforderlich. Beim Verschrauben muß also gleichzeitig auf die genaue Ausrichtung der Profilelemente geachtet werden, was schon bei nur zwei Profilelementen problematisch ist. Dies hat zur Folge, daß die Profilelemente nicht immer winkelgerecht montiert werden. Dadurch kann das Gewächshaus in eine Schieflage geraten, die zu Spannungen in den Bauteilen führt.

Des weiteren hat sich gezeigt, daß Regenwasser, das sich auf dem Dach des Gewächshauses ansammelt, und Kondenswasser, das sich unter dem Dach oder auch in den Kammern der Hohlkammerscheiben bildet, die Lichtdurchlässigkeit der Platten in den bekannten Gewächshäusern beeinträchtigt und somit den Pflanzenwuchs behindert.

Der Erfindung liegt die Aufgabe zugrunde, ein Bauteilset für ein Gewächshaus zu schaffen, das eine Vergrößerung bzw. Verkleinerung des Gewächshauses und eine einfache Ausrichtung der Profilelemente des Gerüstes ermöglicht.

Die Lösung dieser Aufgabe erfolgt erfindungsgemäß mit den Merkmalen des Patentanspruchs 1.

Das erfindungsgemäße Bauteilset bietet die Möglichkeit einer Vergrößerung bzw. Verkleinerung des daraus zusammengesetzten Gewächshauses bezüglich seiner Höhe, seiner Breite und seiner Länge sowie einer exakten Montage der Profilelemente.

Das Gewächshaus, das aus dem erfindungsgemäßen Bauteilset zusammenbaubar ist, weist eine Vorderwand, eine Rückwand, zwei Seitenwände und ein Dach auf. Das Dach kann als Satteldach ausgebildet sein, es sind aber auch alle anderen Dachformen (z. B. Flachdach, Pultdach o. ä.) denkbar. Der flächige Abschluß der Wände sowie des Daches erfolgt über transparente Platten, vorzugsweise Hohlkammerplatten aus Kunststoff, die in ein Gerüst aus leistenförmigen Profilelementen einsetzbar sind.

Die Profilelemente können zu die Vorder- und Rückseite bildenden Teilgerüsten zusammengebaut werden, wobei die Eckpunkte der beiden Teilgerüste mit Längsprofilelementen verbunden sind. Das Bauteilset enthält Verbindungselemente, die bewirken, daß sich die Profilelemente beim Verschrauben exakt ausrichten. Die Montage wird dadurch erheblich erleichtert, und eine Schieflage des Hauses, die zu unerwünschten Spannungen in . den Bauteilen führen und die Stabilität vermindern kann, wird vermieden.

Das erfindungsgemäße Bauteilset sieht eine Trennung von einzelnen Profilelementen in mehrere, vorzugsweise gleichlange Profilsegmente vor, die über Längsverbindungselemente verbindbar sind. Um das Profilelement aus den einzelnen Profilsegmenten zusammensetzen zu können, weisen die Profilsegmente Führungsschienen auf, die aus einem Hohlprofil mit einem Durchbruch bestehen, das beliebig geformt sein kann. Das Längsverbindungselement wird mit seiner linken Seite in das erste und mit seiner rechten Seite in das zweite Profilsegment geschoben und mit beiden verspannt. Da die Querschnittsfläche in einem Abschnitt des Längsverbindungselementes nur geringfügig kleiner bemessen ist als die Querschnittsfläche des Innenraumes der Führungsschiene, aber die Querschnittsformen ansonsten übereinstimmen, kommt es zu einer genauen, fluchtenden Ausrichtung der hintereinanderliegenden Profilsegmente. Der Querschnitt des Längsverbindungselementes muß nicht unbedingt dem Innenquerschnitt der Führungsschiene entsprechen, er sollte allerdings auf seiner zu verspannenden Seite flächig an einer Innenwand der Führungsschiene anliegen.

In einer bevorzugten Ausführungsform des Bauteilsets werden die Profilsegmente mit Längsverbindungselementen verbunden, die einen Flachprofilkörper aufweisen. Dieser Flachprofilkörper bildet einen in die Führungsschienen der Profilsegmente einschiebbaren Teil des Längsverbindungselementes. Die Breite und die Höhe des Flachprofilkörpers sind dabei derart bemessen, daß sie gerade in die Führungsschiene einschiebbar sind. Dadurch wird noch vor dem Verspannen die bestmögliche fluchtende Ausrichtung der hintereinanderliegenden Profilsegmente erreicht. Selbst wenn die durchbrochenen Hohlprofilabschnitte der Profilsegmente, die die Führungsschiene bilden, keinen quaderförmigen Innenquerschnitt haben, liegt der Flachprofilkörper z. T. flächig an einer Innenseite der Schiene an, so daß nach dem Verspannen die gewünschte fluchtende Ausrichtung erzielt wird. Auf einer Seite des Flachprofilkörpers sind mindestens zwei Gewindeschäfte zur Aufnahme von Schraubenmuttern angeordnet. Diese stehen senkrecht zum Flachprofilkörper und erstrecken sich nach dem Einschieben des Flachprofilkörpers in die Führungsschiene durch den Durchbruch in dem die Führungsschiene bildenden Hohlprofilabschnitt nach außen. Auf die vorstehenden Gewindeschäfte, von denen mindestens jeweils ein Schaft auf der Seite eines der zu verbindenden Profilesegmente liegt, können Schraubenmuttern aufgeschraubt werden, die die Profilsegmente verspannen.

Im Fall eines Satteldachs weisen die Teilgerüste für Vorder- und Rückseite ein bodenseitiges horizontales Profilelement auf, an dessen Enden sich zwei senkrecht nach oben erstreckende Profilelemente anschließen, die wiederum mit jeweils einem Profilelement verbunden sind, das mit dem anderen Profilelement schräg zusammengeführt ist. Werden die Ecken der Teilgerüste über lange Längsprofilelemente verbunden, können in bestimmten Abständen entlang der Längsprofilelemente Zwischengerüste zum Einsatz kommen, die die Längsprofilelemente verbinden und die gleiche Form wie die Teilgerüste für Vorder- und Rückseite aufweisen und parallel zu diesen sind, allerdings fehlt das horizontale Profilelement und andere Profilelemente werden benutzt. Für den Einbau von Türen, Fenstern o. ä. in die Wände oder das Dach sind weitere Profilelemente vorgesehen.

In einer weiteren vorteilhaften Ausführungsform des erfindungsgemäßen Bauteilsets sind Eckverbindungselemente vorgesehen, die zum Verbinden der Profilelemente mit Führungsschienen geeignet sind. Diese Eckverbindungselemente dienen vorzugsweise der Verbindung der Profilelemente des Teilgerüstes für Vorder- bzw. Rückseite untereinander und mit den Längsprofilelementen des Gewächshauses. Die Eckverbindungselemente weisen mindestens zwei Seiten auf, die als Anlagefläche für die zu verbindenden Profilelemente dienen. Auf den Seiten erstrecken sich vorspringende Ansätze, die in die Führungsschienen der Profilelemente einlegbar sind. Beim Verspannen der Eckverbindungselemente kommt es somit zu einer winkelgerechten Ausrichtung der Profilelemente zueinander.

In einer bevorzugten Ausführungsform des Bauteilsets sind Eckverbindungselemente vorgesehen, die als rechtwinklige Winkelelemente mit jeweils zwei Schenkeln ausgebildet sind. Dieses Winkelelement dient vornehmlich der Verbindung der Enden der bodenseitigen Profilelemente der Teilgerüste mit den angrenzenden Profilelementen. Beide Schenkel des Winkelelementes weisen auf ihrer Außenseite jeweils mindestens zwei vorspringende Ansätze auf, wobei mindestens ein Ansatz parallel zur Eckkante des Winkelelements verläuft, während mindestens ein anderer Ansatz rechtwinklig zur Eckkante des Winkelelements verläuft. Die beiden Ansätze auf den Schenkeln sollen sich in Orientierungsrichtung der Schenkel nicht überschneiden, sondern getrennt übereinander liegen. Die vorspringenden Ansätze sind jeweils von mindestens einer Bohrung unterbrochen. Die rechtwinklig zur Eckkante des Winkelelements verlaufenden vorspringenden Ansätze können an der Eckkante des Winkelelements in ein Anschlagelement münden, wobei ein Anschlagelement nicht zwingend erforderlich ist, aber vorteilhafterweise vorgesehen sein sollte.

Um eine feste und winkelgerechte Verbindung zwischen den Profilelementen zu gewährleisten, werden in die Führungsschienen der zu verbindenden Profilelemente Verbindungselemente eingeschoben, die im wesentlichen einem Längsverbindungselement entsprechen, aber zweckmäßigerweise kürzer sind und nur mindestens einen Gewindeschaft aufweisen. Die aus den beiden horizontal anzuordnenden Profilelementen ragenden Gewindeschäfte erstrecken sich jeweils durch die Bohrung des Schenkels, die den rechtwinklig zu Eckkante des Winkelelements verlaufenden vorspringenden Ansatz unterbricht. Auf diese Weise legt sich der vorspringende Ansatz in den nur unwesentlich breiteren Durchbruch des Hohlprofilabschnitts, der die Führungsschiene bildet, und gewährleistet somit die Verdrehsicherheit des Profilelements bzw. dessen winkelgerechte Ausrichtung. Das die rechtwinklig zur Eckkante verlaufenden vorspringenden Ansätze begrenzende Anschlagelement verhindert ein Verschieben des Profilelements in Richtung der Führungsschiene. Die Befestigung des senkrechten Profilelementes des Teilgerüstes für Vorder- bzw. Rückseite des Gewächshauses erfolgt analog, wobei in diesem Fall der parallel zur Eckkante des Winkelelements verlaufende vorspringende Ansatz die winkelgerechte Ausrichtung erlaubt. Auch für das senkrecht anzubringende Profilelement verhindert das Anschlagelement ein Verschieben des Profilelements in Richtung der Führungsschiene.

In einer weiteren bevorzugten Ausführungsform des Bauteilsets sind Eckverbindungselemente vorgesehen, die eine Basisplatte mit einem mittleren Schenkel und zwei abgewinkelten Schenkeln sowie eine Seitenplatte aufweisen. Diese Eckverbindungselemente dienen vornehmlich der Verbindung der Profilelemente des Teilgerüstes für Vorder- bzw. Rückseite untereinander und mit den Profilelementen, die den First und die längsseitigen Kanten des Satteldaches bilden. Die Seitenplatte des Eckverbindungselementes ist rechtwinklig zu den angrenzenden Schenkeln der Basisplatte angeordnet und umfaßt zwei Schenkel. Der mittlere Schenkel der Basisplatte weist auf dessen Außenseite einen vorspringenden Ansatz auf, der in Längsrichtung des mittleren Schenkels verläuft. Ebenso weisen die zwei Schenkel der Seitenplatte auf deren Außenseiten jeweils einen vorspringenden Ansatz auf, der in Längsrichtung des jeweiligen Schenkels verläuft. Alle vorspringenden Ansätze des Eckverbindungselementes sind von mindestens einer Bohrung unterbrochen.

Bei einer Eckverbindung mit derartigen Eckverbindungselementen werden Verbindungselemente in die Führungsschienen der Profilelemente des Teilgerüstes und der Längsprofilelemente eingeschoben, die im wesentlichen einem Längsverbindungselement entsprechen, aber zweckmäßigerweise kürzer sind und nur mindestens einen Gewindeschaft aufweisen. Während sich die Gewindeschäfte der beiden Profilelemente des Teilgerüstes für Vorder- bzw. Rückseite des Gewächshauses in die Bohrungen in den Schenkeln der Seitenfläche erstrecken, ist die Bohrung in dem mittleren Schenkel der Basisplatte einem Gewindeschaft, der sich aus dem den First oder die längsseitige Kante des Satteldaches bildenden Profilelement erstreckt, vorbehalten. Die in die Durchbrüche in den Hohlprofilen eingepaßten vorspringenden Ansätze gewährleisten die winkelgerechte Ausrichtung und Verdrehsicherheit vor und nach dem Anbringen der Schraubenmuttern. Auch bei diesen Eckverbindungselementen können an den Enden der vorspringenden Ansätze Anschlagelemente vorgesehen werden, die einer Verschiebung der Profilelemente in Richtung der Führungsschienen vorbeugen sollen. Der Winkel zwischen den beiden abgewinkelten Schenkeln der Basisplatte sollte bei Eckverbindungselementen, die u. a. das den First des Satteldaches bildende Profilelement aufnehmen, dem gewünschten Winkel des Satteldaches entsprechen, während sich der entsprechende Winkel bei den Eckverbindungselementen, die u. a. das die längsseitige Kante des Satteldaches bildende Profilelement aufnehmen, aus dem Winkel der erstgenannten Eckverbindungselemente ergibt. Vorteilhafterweise ist der Winkel zwischen den beiden Dachflächen genauso bemessen wie der Winkel zwischen einer Dachhälfte und der angrenzenden Seitenwand des Gewächshauses, da auf diese Wiese einheitliche Eckverbindungselemente vorgesehen werden können, wodurch die Teilevielfalt reduziert wird.

Ein weiterer Vorteil des erfindungsgemäßen Bauteilsets besteht darin, daß es Bauteile zur Verfügung stellt, die eine Abfuhr von Regenwasser, das sich auf dem Dach sammelt, gewährleistet. Außerdem bieten einige Bauteile die Möglichkeit Kondenswasser abzuführen, das sich im Innern des Gewächshauses an oder in dessen transparenten Platten, sofern diese als Hohlkammerscheiben ausgebildet sind, absetzt. Auf diese Weise wird die Bildung von Grünspan verringert, wodurch die Lichtdurchlässigkeit der transparenten Platten verbessert wird.

Eine weitere vorteilhafte Gestaltungsform des erfindungsgemäßen Bauteilsets besteht darin, daß spezielle Profilsegmente zur Ausbildung des Firstes des Gewächshausdaches vorgesehen sind, die fortan als Firstprofilsegmente bezeichnet werden, die sich wiederum zu Firstprofilelementen zusammensetzen lassen. Ein Firstprofilsegment weist an seinem unteren Ende einen rechteckigen Hohlprofilabschnitt auf, dessen Längsseite nach unten weist. Diese Längsseite ist durchbrochen, wobei der Durchbruch vorteilhafterweise in der Mitte der unteren Längsseite derart gestaltet ist, daß eine Längsachsensymmetrie gegeben ist. Der durchbrochene Hohlprofilabschnitt fungiert als Führungsschiene und dient der Aufnahme der Längsverbindungselemente. Vorteilhafterweise ist der Innenquerschnitt des Hohlprofilabschnitts derart ausgebildet, daß ein Längsverbindungselement einschiebbar ist, dessen Querschnitt unwesentlich kleiner dimensioniert ist. Allerdings ist auch ein beliebiger anderer Innenquerschnitt der Führungsschiene denkbar, solange gewährleistet ist, daß das Längsverbindungselement entweder in seinem Querschnitt dem Innenquerschnitt der Führungsschiene entspricht oder eine Anlagefläche in der Führungsschiene auf der zu verspannenden Seite des Längsverbindungselementes findet. Die Seiten des Firstprofilsegmentes weisen jeweils mindestens zwei weitere durchbrochene Hohlprofilabschnitte auf, die der Aufnahme der transparenten Platten dienen.

Eine weitere vorteilhafte Gestaltungsform des erfindungsgemäßen Bauteilsets besteht darin, daß spezielle Profilsegmente zur Ausbildung der längsseitigen Kanten des Satteldaches vorgesehen sind, die fortan als Abflußprofilsegmente bezeichnet werden, die sich wiederum zu Abflußprofilelementen zusammensetzen lassen. Ein Abflußprofilsegment weist im wesentlichen einen U-förmigen Abschnitt auf, der die Funktion einer Regenrinne hat. Prinzipiell ist allerdings jegliche andere Form denkbar, die geeignet ist, von oben einfallendes Wasser aufzufangen. An den U-förmigen Abschnitt schließen sich durchbrochene Hohlprofilabschnitte zur Aufnahme der transparenten Platten und Verbindungselementen an.

Der Hohlprofilabschnitt zur Aufnahme der Platte ist vorzugsweise derart ausgebildet, daß unterhalb des Bereiches den die eingesetzte Platte einnimmt ein rinnenförmiger Bereich existiert, der geeignet ist, das aus den Hohlkammerscheiben fließende Kondenswasser aufzunehmen und abzuleiten, so daß sich das Kondenswasser nicht in den Kammern der Scheiben ansammelt.

Eine weitere vorteilhafte Gestaltungsform des erfindungsgemäßen Bauteilsets besteht darin, daß spezielle Profilsegmente zur Ausbildung der bodenseitigen Kanten des Gewächshauses vorgesehen sind, die fortan als Bodenprofilsegmente bezeichnet werden, die sich wiederum zu Bodenprofilelementen zusammensetzen lassen. Ein Bodenprofilsegment weist ein nach oben durchbrochenen Hohlprofilabschnitt auf, der der Aufnahme der transparenten Platten dient. Dieser Hohlprofilabschnitt ist vorzugsweise rechteckförmig und so breit wie die Kunststoffplatte, wobei der Durchbruch die gesamte obere Kante des rechteckigen Hohlprofilabschnitts einnimmt. An der Innenseite des Hohlprofilabschnittes verläuft ein horizontaler Steg. Dieser ist vorzugsweise schmal und in jedem Fall nicht so breit wie der Hohlprofilabschnitt. Der Hohlprofilabschnitt nimmt die Platte auf, wobei der Steg gewährleistet, daß der Hohlprofilabschnitt nicht gänzlich vom unteren Rand der Platte ausgefüllt wird. Auf diese Weise verbleibt in dem Hohlprofilabschnitt unterhalb des Steges ein Raum, in dem sich abfließendes Kondenswasser aus den Kammern der vorzugsweise eingesetzten Hohlkammerscheiben sammeln kann. Des weiteren weist das Bodenprofilsegment einen durchbrochenen Hohlprofilabschnitt als Führungsschiene zur Aufnahme der Längsverbindungselemente auf.

Im folgenden wird die Erfindung an Hand von Beispielen unter Bezugnahme auf die beigefügten Figuren eingehender erläutert.

Es zeigen:
- Fig. 1: eine perspektivische Ansicht eines Gewächshauses 1, das aus dem erfindungsgemäßen Bauteilset zusammengebaut wurde,
- Fig. 1a: das Gewächshaus von Fig. 1 mit nur einer Schiebetür,
- Fig. 2a: den Ausschnitt A von Fig. 1 in vergrößerter Explosionsdarstellung,
- Fig. 2b: den Ausschnitt A von Fig. 1 in vergrößerter Darstellung,
- Fig. 3a: den Ausschnitt B von Fig. 1 in vergrößerter Explosionsdarstellung,
- Fig. 3b: den Ausschnitt B von Fig. 1 in vergrößerter Darstellung,
- Fig. 4a: den Ausschnitt C von Fig. 1 in vergrößerter Explosionsdarstellung,
- Fig. 4b: den Ausschnitt C von Fig. 1 in vergrößerter Darstellung,
- Fig. 5a: den Ausschnitt D von Fig. 1 in vergrößerter Explosionsdarstellung,
- Fig.5b: den Ausschnitt D von Fig. 1 in vergrößerter Darstellung,
- Fig. 6a: den Ausschnitt E von Fig. 1 in vergrößerter Explosionsdarstellung,
- Fig. 6b: den Ausschnitt E von Fig. 1 in vergrößerter Darstellung,
- Fig. 7a: den Ausschnitt F von Fig. 1 in vergrößerter Explosionsdarstellung,
- Fig. 7b: den Ausschnitt F von Fig. 1 in vergrößerter Darstellung,
- Fig. 8a: den Ausschnitt G von Fig. 1 in vergrößerter Explosionsdarstellung,
- Fig. 8b: den Ausschnitt G von Fig. 1 in vergrößerter Darstellung,
- Fig. 9: den Ausschnitt H von Fig. 1 in vergrößerter Explosionsdarstellung (ohne Tür),
- Fig. 10a: eine Explosionsdarstellung eines Teilgerüstes für eine Schiebetür
- Fig. 10b: eine Darstellung des Teilgerüstes für die Schiebetür von Fig. 10a
- Fig. 10c: eine Anleitung zum Einlegen von Platten in das Teilgerüst für eine Schiebetür aus Fig. 10b
- Fig. 11: eine Anleitung zum Einhängen der Schiebetür in das Türträgerprofilelement

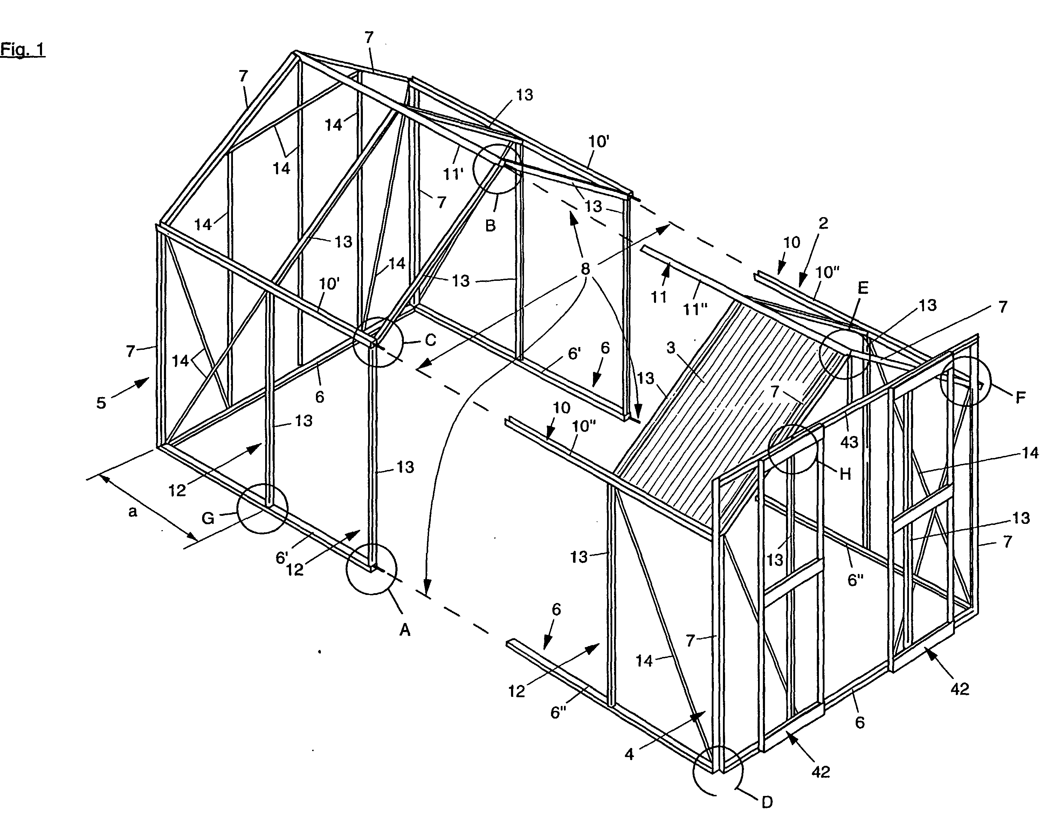

Fig. 1 zeigt eine perspektivische Ansicht eines Gewächshauses 1, das aus dem erfindungsgemäßen Bauteilset zusammengebaut wurde. Es besteht im wesentlichen aus einem Gerüst 2 und transparenten Platten 3, vorzugsweise Hohlkammerplatten, von denen der Übersichtlichkeit halber nur eine dargestellt ist. Das Gerüst weist ein Teilgerüst 4 für die Vorderseite und ein Teilgerüst 5 für die Rückseite des Gewächshauses 1 auf. Beide Teilgerüste 4,5 weisen ein Bodenprofilelement 6 auf, an dessen Enden sich jeweils ein senkrecht nach oben erstreckendes Giebelprofilelement 7 anschließt. An die oberen Enden der Giebelprofilelemente 7 schließt sich jeweils ein weiteres Giebelprofilelement 7 an, wobei diese gegeneinander geneigt und an ihren Enden verbunden sind. Die Ecken der Teilgerüste 4,5 sind über Längsprofilelemente 8 miteinander verbunden, wobei die bodenseitigen Längsprofilelemente 8 als Bodenprofilelemente 6, die Längsprofilelemente 8, die die längsseitige Kante des Daches bilden, als Ablaufprofilelemente 10 und das Längsprofilelement 8, das den Dachfirst des Gewächshausdaches bilden, als Firstprofilelement 11 ausgebildet sind. In bestimmten Abständen a sind die Längsprofilelemente 8 durch Zwischengerüste 12 verbunden, die im wesentlichen die gleiche Form wie die Teilgerüste 4,5 für Vorder- und Rückseite des Gewächshauses haben, allerdings setzen sich die Zwischengerüste 12 aus Strebenprofilelementen 13 zusammen und es fehlt ein bodenseitiges Profilelement. Weitere Profilelemente 14 tragen zur Versteifung in bestimmten Bereichen des Gewächshauses bei. Die Längsprofilelemente 8, die sich in Firstprofilelement 11, Abflußprofilelement 10 bzw. Bodenprofilelemente 6 unterteilen lassen, setzen sich erfindungsgemäß aus mindestens zwei Firstprofilsegmenten 11',11'', zwei Abflußprofilsegmenten 10',10'' bzw. zwei Bodenprofilsegmenten 6',6'' zusammen.

Fig. 1a zeigt das Gewächshaus aus Fig. 1 mit nur einer statt zwei Schiebetüren 42. Eine genauere Beschreibung erfolgt im Rahmen der Türbeschreibung.

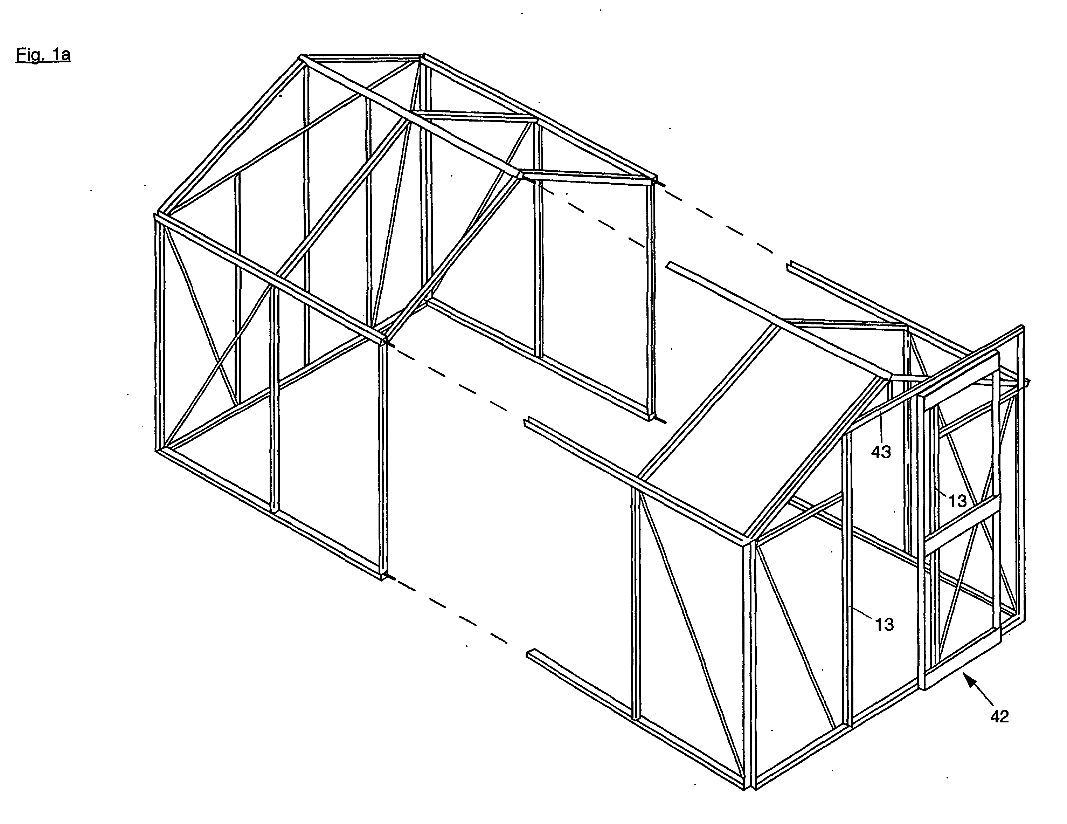

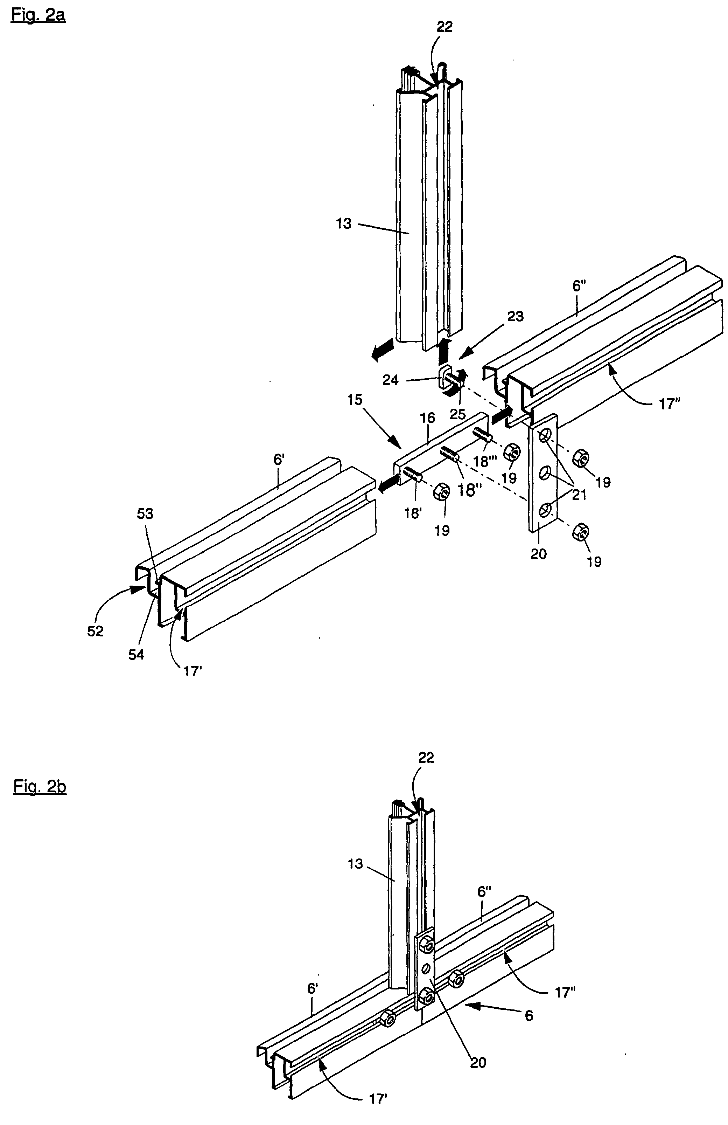

Fig. 2a zeigt den Ausschnitt A von Fig. 1 in vergrößerter Explosionsdarstellung. Die Figur macht deutlich, wie zwei Bodenprofilsegmente 6' ,6 " zu einem langen Bodenprofilelement 6 verbindbar sind. Ein Längsverbindungselement 15 umfaßt einen Flachprofilkörper 16, der mit seinen beiden Enden jeweils in Führungsschienen 17',17'' der Bodenprofilsegmente 6',6'' einführbar ist, sowie drei an einer Seite des Flachprofilkörpers 16 senkrecht angeordnete Gewindeschäfte 18',18'',18'''. Ist das Längsverbindungselement 15 in die Enden der Führungsschienen 17',17'', die nun aneinanderliegen, eingelegt, erstreckt sich der Gewindeschaft 18' aus der Führungsschiene 17' des Bodenprofilsegmentes 6' , während sich der Gewindeschaft 18''' aus der Führungsschiene 17'' des Bodenprofilsegmentes 6'' erstreckt. Beide Bodenprofilsegmente 6',6'' sind mit Schraubenmuttern 19, die auf die Gewindeschäfte 18'und 18''' aufgeschraubt werden, verspannbar. Des weitern zeigt Fig. 2a eine Möglichkeit der Verbindung eines Strebenprofilelements 13 eines Zwischengerüstes 12 mit dem Bodenprofilelement 6, das sich aus der Verbindung der beiden Bodenprofilsegmente 6'und 6'' ergibt. Hierbei kommt eine gerade Verbindungsplatte 20 zum Einsatz, die mindestens zwei Bohrungen 21 aufweist. Die Verbindungsplatte 20 wird mit einer endseitigen Bohrung 21 auf den mittleren Gewindeschaft 18 " gesteckt und mit einer Schraubenmutter 19 verspannt, so daß die Verbindungsplatte 20 unter Ausbildung eines rechten Winkels mit den Bodenprofilsegmenten 6',6'' nach oben weist. In eine Führungsschiene 22 des Strebenprofilelements 13 wird ein Verbindungselement 23 eingesetzt, das im wesentlichen einem Längsverbindungselement 15 entspricht, wobei der Flachprofilkörper 24 des Verbindungselementes 23 sehr viel geringere Abmessungen hat und nur mindestens einen Gewindeschaft 25 aufweist. Die Abmessungen des Flachprofilkörpers 24 sind derart gewählt, daß das Verbindungselement 23 in einer bestimmten Position in die Führungsschiene 22 einsetzbar ist, wobei ein Verdrehen nach dem Einsetzen eine Verankerung des Verbindungselementes 23 in der Führungsschiene 22 bewirkt, d. h., das Verbindungselement 23 muß im Gegensatz zum Längsverbindungselement 15 nicht von einer Seite in die Führungsschiene 22 eingeschoben werden. Um das Strebenprofilelement 13 mit den Bodenprofilsegmenten 6',6'' zu verbinden, muß sich der Gewindeschaft 25, der aus der Führungsschiene 22 des Strebenprofilelements 13 herausragt, in eine Bohrung 21 der geraden Verbindungsplatte 20 erstrecken. Ist das Strebenprofilelement 13 auf den Bodenprofilsegmenten 6',6" aufgesetzt und bildet mit diesen einen rechten Winkel, so kann das Strebenprofilelement 13 durch Aufschrauben einer Schraubenmutter 19 auf den Gewindeschaft 25 verspannt werden. Des weiteren zeigt Fig. 2a den Aufbau eines Bodenprofilelementes 6 bzw. eines Bodenprofilesegmentes 6' . Ein Bodenprofilsegment 6' weist einen nach oben durchbrochenen Hohlprofilabschnitt 52 auf an dessen Innenseite ein kurzer Steg 53 verläuft. Der Hohlprofilabschnitt 52 nimmt die Platte auf, die einen Teil einer Seitenwand bildet, wobei der Steg 53 gewährleistet, daß der Hohlprofilabschnitt 52 nicht gänzlich vom unteren Rand der Platte ausgefüllt wird. Auf diese Weise verbleibt unterhalb des Steges 53 ein Raum 54 , in dem sich abfließendes Kondenswasser aus den Kammern der vorzugsweise eingesetzten Hohlkammerscheiben sammeln kann. Des weiteren weist das Bodenprofilsegment eine Führungsschiene 17' zur Aufnahme der Längsverbindungselemente auf, die ebenfalls von einem durchbrochenen Hohlprofilabschnitt gebildet wird.

Fig. 2b zeigt den Ausschnitt A von Fig. 1 in vergrößerter Darstellung bzw. die zusammengesetzten Bauteile aus Fig. 2a. Das Strebenprofilelement 13 weist unter Ausbildung eines rechten Winkels mit den Bodenprofilsegmenten 6',6'' nach oben, während die fluchtend verbundenen Bodenprofilsegmente 6',6" das Bodenprofilelement 6 bilden.

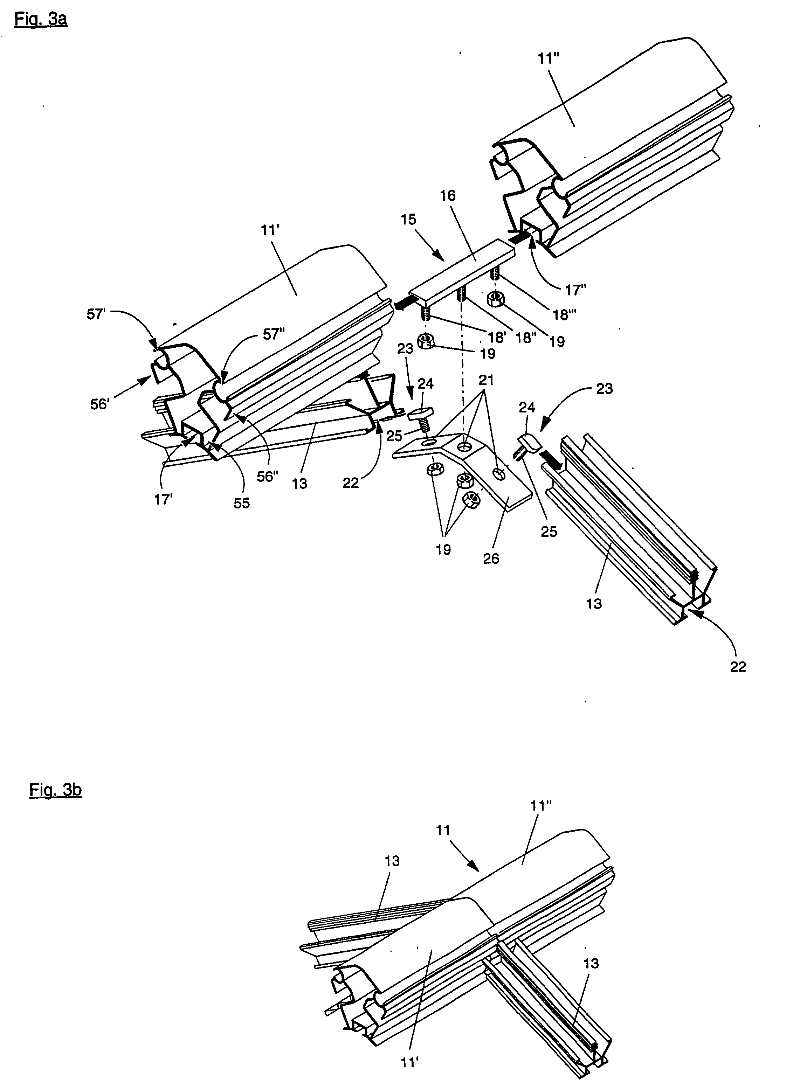

Fig. 3a zeigt den Ausschnitt B von Fig. 1 in vergrößerter Explosionsdarstellung. Die Figur macht deutlich, wie zwei Firstprofilsegmente 11',11'' zu einem langen Firstprofilelement 11 verbindbar sind. Ein Längsverbindungselement 15 umfaßt einen Flachprofilkörper 16, der mit seinen beiden Enden jeweils in Führungsschienen 17',17'' der Firstprofilsegmente 11',11'' einführbar ist, sowie drei an einer Seite des Flachprofilkörpers 16 senkrecht angeordnete Gewindeschäfte 18',18'',18'''. Ist das Längsverbindungselement 15 in die Enden der Führungsschienen 17',17'', die nun aneinanderliegen, eingelegt, erstreckt sich der Gewindeschaft 18' aus der Führungsschiene 17' des Firstprofilsegmentes 11', während sich der Gewindeschaft 18''' aus der Führungsschiene 17'' des Firstprofilsegmentes 11'' erstreckt. Beide Firstprofilsegmente 11',11'' sind mit Schraubenmuttern 19, die auf die Gewindeschäfte 18' und 18''' aufgeschraubt werden, verspannbar. Des weiteren zeigt Fig. 3a eine Möglichkeit der Verbindung zweier Strebenprofilelemente 13 eines Zwischengerüstes 12 mit dem Firstprofilelement 11, das sich aus der Verbindung der beiden Firstprofilsegmente 11' und 11'' ergibt. Hierbei kommt eine gebogene Verbindungsplatte 26 zum Einsatz, die mindestens drei Bohrungen 21 aufweist. Die Verbindungsplatte 26 wird mit einer mittleren Bohrung 21 auf den mittleren Gewindeschaft 18'' gesteckt und mit einer Schraubenmutter 19 verspannt, so daß die Verbindungsplatte 20 unter Ausbildung eines rechten Winkels mit den Firstprofilsegmenten 11',11'' zu beiden Seiten der Firstprofilsegmente 11',11'' weist. In die Führungsschienen 22 der Strebenprofilelemente 13 werden jeweils ein Verbindungselement 23 eingesetzt, dessen Beschaffenheit und Funktionsweise bereits in der Beschreibung zu Fig. 2a erläutert wurde. Um die Strebenprofilelemente 13 mit den Firstprofilsegmenten 11',11'' zu verbinden, müssen sich die Gewindeschäfte 25, die aus den Führungsschienen 22 der Strebenprofilelemente 13 herausragen, jeweils zu einer Seite des Firstes in eine Bohrung 21 der gebogenen Verbindungsplatte 20 erstrecken. Sind die Strebenprofilelemente 13 mit ihren Enden bis an die Firstprofilsegmente 11',11'' herangeführt und bilden mit diesen einen rechten Winkel, so können die Strebenprofilelement 13 durch Aufschrauben von Schraubenmuttern 19 auf den Gewindeschäften 25 verspannt werden.

Ein Firstprofilsegment 11' hat ein längsachsensymmetrisches Profil. Das Firstprofilsegment 11' weist an seinem unteren Ende einen rechteckigen Hohlprofilabschnitt 55 auf, dessen Längsseite nach unten weist. Diese Längsseite ist in deren Mitte durchbrochen. Eine derart ausgebildete Führungsschiene 17' dient der Aufnahme der Längsverbindungselemente 15. Die Seiten des Firstprofilsegmentes 11' weisen jeweils mindestens zwei weitere durchbrochene Hohlprofilabschnitte 56',57' bzw. 56'',57'' auf. Ein unten angeordneter Hohlprofilabschnitt 56' bzw. 56'' ist derart ausgebildet, daß diePlatte, die die Fläche jeweils einer Hälfte des Satteldaches bildet, mit Spiel einsetzbar ist. Ein darüber angeordneter durchbrochener kreisförmiger Hohlprofilabschnitt 57',57'' dient der Aufnahme von Clips, die seitlich eingeschoben sind und Halterungen für etwaige Klappfenster darstellen.

Fig. 3b zeigt den Ausschnitt B von Fig. 1 in vergrößerter Darstellung bzw. die zusammengesetzten Bauteile aus Fig. 3a. Die Strebenprofilelemente 13 weisen unter Ausbildung eines rechten Winkels mit den Firstprofilsegmenten 11',11'' zu den Seiten des Firstes, während die fluchtend verbundenen Firstprofilsegmente 11',11'' das Firstprofilelement 11 bilden.

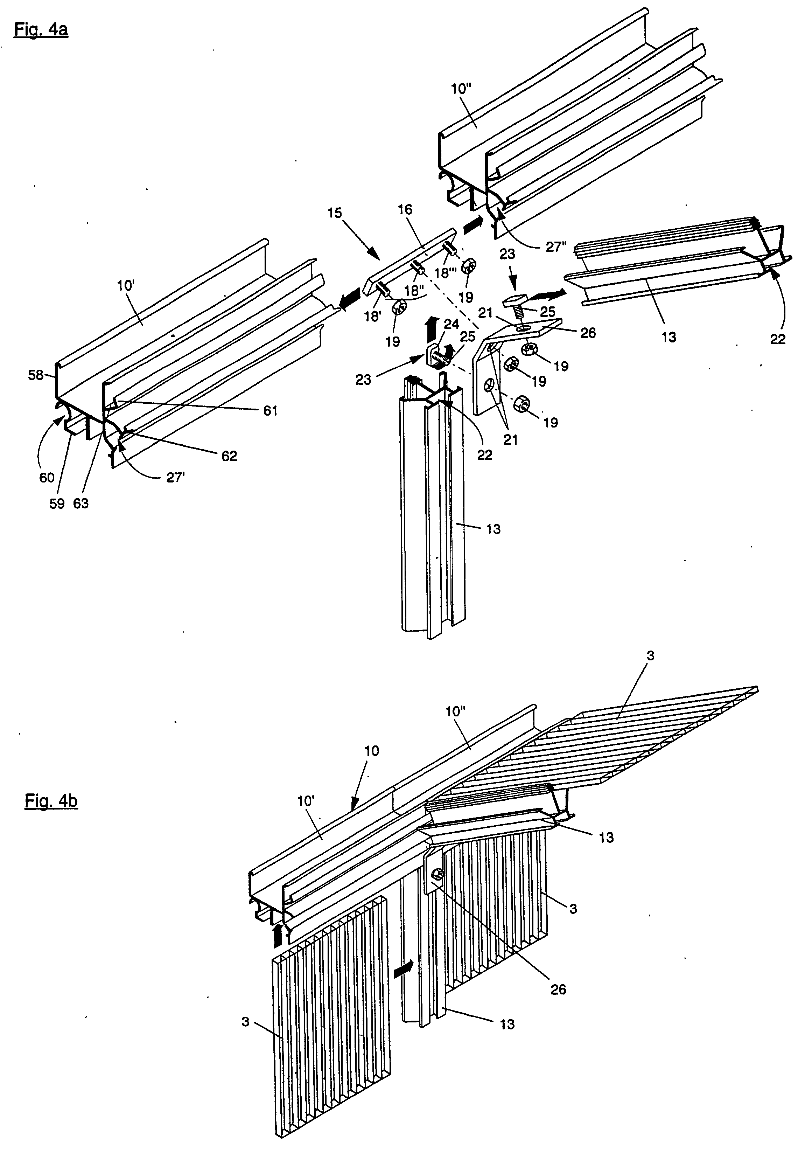

Fig. 4a zeigt den Ausschnitt C von Fig. 1 in vergrößerter Explosionsdarstellung. Die Figur macht deutlich, wie zwei Ablaufprofilsegmente 10',10'' zu einem langen Ablaufprofilelement 10 verbindbar sind. Ein Längsverbindungselement 15 umfaßt einen Flachprofilkörper 16, der mit seinen beiden Enden jeweils in Führungsschienen 27',27'' der Abflußprofilsegmente 10',10'' einführbar ist, sowie drei an einer Seite des Flachprofilkörpers 16 senkrecht angeordnete Gewindeschäfte 18',18'',18'''. Ist das Längsverbindungselement 15 in die Enden der Führungsschienen 27',27'', die nun aneinanderliegen, eingelegt, erstreckt sich der Gewindeschaft 18' aus der Führungsschiene 27' des Abflußprofilsegmentes 10', während sich der Gewindeschaft 18''' aus der Führungsschiene 27'' des Abflußprofilsegmentes 10'' erstreckt. Beide Abflußprofilsegmente 10',10'' sind mit Schraubenmuttern 19, die auf die Gewindeschäfte 18' und 18''' aufgeschraubt werden, verspannbar. Des weiteren zeigt Fig. 4a eine Möglichkeit der Verbindung zweier Strebenprofilelemente 13 eines Zwischengerüstes 12 mit dem Abflußprofilelement 10, das sich aus der Verbindung der beiden Abflußprofilsegmente 10'und 10'' ergibt. Hierbei kommt eine gebogene Verbindungsplatte 26 zum Einsatz, die mindestens drei Bohrungen 21 aufweist. Die Verbindungsplatte 26 entspricht der Verbindungsplatte 26 aus Fig. 3a, wenn der Winkel zwischen den beiden Dachflächen vorteilhafterweise genauso bemessen ist wie der Winkel zwischen einer Dachhälfte und der angrenzenden Seitenwand des Gewächshauses. Auf diese Wiese können einheitliche gebogene Verbindungsplatten 26 vorgesehen werden, wodurch die Teilevielfalt reduziert wird. Die Verbindungplatte 26 aus Fig. 4a wird mit einer mittleren Bohrung 21 auf den mittleren Gewindeschaft 18'' gesteckt und mit einer Schraubenmutter 19 verspannt, so daß die Verbindungsplatte 20 unter Ausbildung eines rechten Winkels mit den Abflußprofilsegmenten 10',10'' zu beiden Seiten der Abflußprofilsegmente 10',10'' weist. In die Führungsschienen 22 der Strebenprofilelemente 13 wird jeweils ein Verbindungselement 23 eingesetzt, dessen Beschaffenheit und Funktionsweise bereits in der Beschreibung zu Fig. 2a erläutert wurde. Um die Strebenprofilelemente 13 mit den Abflußprofilsegmenten 10',10'' zu verbinden, müssen sich die Gewindeschäfte 25, die aus den Führungsschienen 22 der Strebenprofilelemente 13 herausragen, jeweils zu einer Seite der Abflußprofilsegmente 10',10" in eine Bohrung 21 der gebogenen Verbindungsplatte 20 erstrecken. Sind die Strebenprofilelemente 13 mit ihren Enden bis an die Abflußprofilsegmente 10',10'' herangeführt und bilden mit diesen einen rechten Winkel, so können die Strebenprofilelement 13 durch Aufschrauben von Schraubenmuttern 19 auf den Gewindeschäften 25 verspannt werden.

Ein Abflußprofilsegment 10' weist im wesentlichen einen nach oben durchbrochenen Hohlprofilabschnitt 58 auf, der die Funktion einer Regenrinne hat. An die Unterseite dieser Regenrinne schließen sich ein durchbrochener Hohlprofilabschnitt 59 sowie daneben ein durchbrochener kreisförmiger Hohlprofilabschnitt 60 an. Die beiden Hohlprofilabschnitte 59,60 sind ähnlich wie die seitlichen Hohlprofilabschnitte 56',57' bzw. 56'',57'' des Firstprofilsegmentes 11' ausgelegt und haben die gleiche Funktion, nur weisen diesmal die Durchbrüche nach unten, damit eine senkrechte Platte, die einen Teil einer Seitenwand bildet, bzw. ein Fensterclip aufgenommen werden kann. An einer Seitenwand der Regenrinne sind weitere durchbrochene Hohlprofilabschnitte 61,62 angeordnet, von denen der eine (61) die Aufnahme der Platte, die eine Hälfte des Satteldaches bildet, und der andere (62) die Führungsschiene 27' bildet. Der Hohlprofilabschnitt 61 zur Aufnahme der Platte ist derart ausgebildet, daß unterhalb des Bereiches den die eingesetzte Platte einnimmt ein rinnenförmiger Bereich 63 existiert, der geeignet ist, das aus den Hohlkammerscheiben fließende Kondenswasser aufzunehmen und abzuleiten, so daß sich das Kondenswasser nicht in den Kammern der Scheiben ansammelt.

Fig. 4b zeigt den Ausschnitt C von Fig. 1 in vergrößerter Darstellung bzw. die zusammengesetzten Bauteile aus Fig. 4a. Die Strebenprofilelemente 13 weisen unter Ausbildung eines rechten Winkels mit den Abflußprofilsegmenten 10',10'' zu den Seiten derselben, während die fluchtend verbundenen Abflußprofilsegmente 10',10'' das Abflußprofilelement 10 bilden. Des weiteren sind transparente Platten 3 angedeutet, die in die Strebenprofilelemente 13 und das Abflußprofilelement 10 einsetzbar sind.

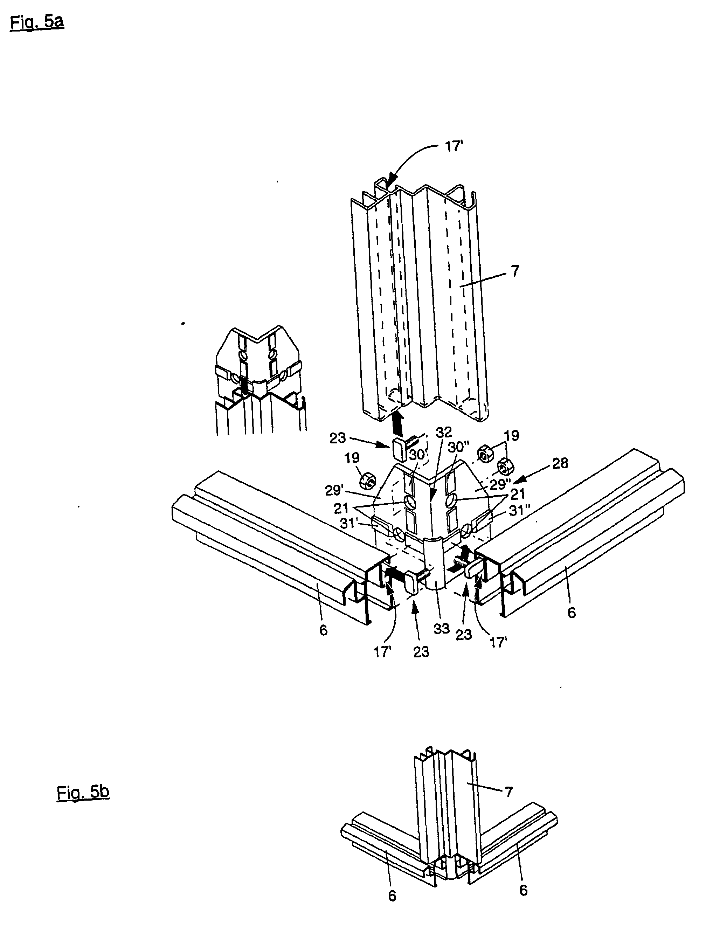

Fig. 5a zeigt den Ausschnitt D von Fig. 1 in vergrößerter Explosionsdarstellung und verdeutlicht den Einsatz eines bodenseitigen Eckverbindungselementes 28 zum Verbinden zweier Bodenprofilelemente 6 untereinander und mit einem Giebelprofilelement 7. Das Eckverbindungselemente 28 ist als ein rechtwinkliges Winkelelement mit zwei Schenkeln 29',29'' ausgebildet. Beide Schenkel 29',29'' weisen auf ihrer Außenseite zwei vorspringende Ansätze 30',31'bzw. 30'',31'' auf, wobei der vorspringende Ansatz 30' bzw. 30'' parallel zur Eckkante 32 des Winkelelements verläuft, während der andere Ansatz 31' bzw. 31'' rechtwinklig zur Eckkante 32 des Winkelelements verläuft. Die beiden vorspringenden Ansätze 30',31' bzw. 30'',31'' auf den Schenkeln 29' bzw. 29'' sind derart angeordnet, daß sie sich in Orientierungsrichtung der Schenkel nicht überschneiden, sondern getrennt übereinander liegen. Die vorspringenden Ansätze 30',30'',31',31'' sind jeweils von einer Bohrung 21 unterbrochen, und die rechtwinklig zur Eckkante 32 des Winkelelements verlaufenden vorspringenden Ansätze 31',31'' münden an der Eckkante 32 des Winkelelements in ein Anschlagelement 33, das ebenfalls von einem vorspringenden Ansatz gebildet ist. In die Führungsschienen 17' der Bodenprofilelemente 6 und des Giebelprofilelementes 7 sind die bereits in Fig. 2a gezeigten Verbindungselemente 23 eingesetzt, wobei sich die Schäfte, die aus den Führungsschienen 17' der Bodenprofilelemente herausragen, in jeweils eine Bohrung 21 erstrecken, die einen rechtwinklig zur Eckkante 32 des Winkelelements verlaufenden vorspringenden Ansatz 31',31'' unterbricht. Beim Verschrauben mit Schraubenmuttern 19 senken sich die vorspringenden Ansätze 31',31'' in die Durchbrüche der Führungsschienen 17' und gewährleisten die Verdrehsicherheit. Die Enden der Bodenprofilelemente 6 sollten an die Seiten des Anschlagelementes 33 angrenzen. Der Gewindeschaft, der aus der Führungsschiene 17' des Giebelprofilelementes 7 ragt, erstreckt sich durch eine der Bohrungen 21, die einen parallel zur Eckkante 32 des Winkelelementes verlaufenden vorspringenden Ansatz 30' bzw. 30'' unterbricht. Beim Verschrauben mit einer Schraubenmutter 19 senkt sich der vorspringende Ansatz (in diesem Fall) 30' in den Durchbruch der Führungsschiene 17' und gewährleistet die Verdrehsicherheit. Auch das Giebelprofilelement 7 sollte an die obere Seite des Anschlagelementes 33 angrenzen.

Fig. 5b zeigt den Ausschnitt D von Fig. 1 in vergrößerter Darstellung bzw. die zusammengesetzten Bauteile aus Fig. 5a. Das Giebelprofilelement 7 bildet mit beiden Bodenprofilelementen 6 einen rechten Winkel, und auch die Bodenprofilelemente 6 verlaufen rechtwinklig zueinander.

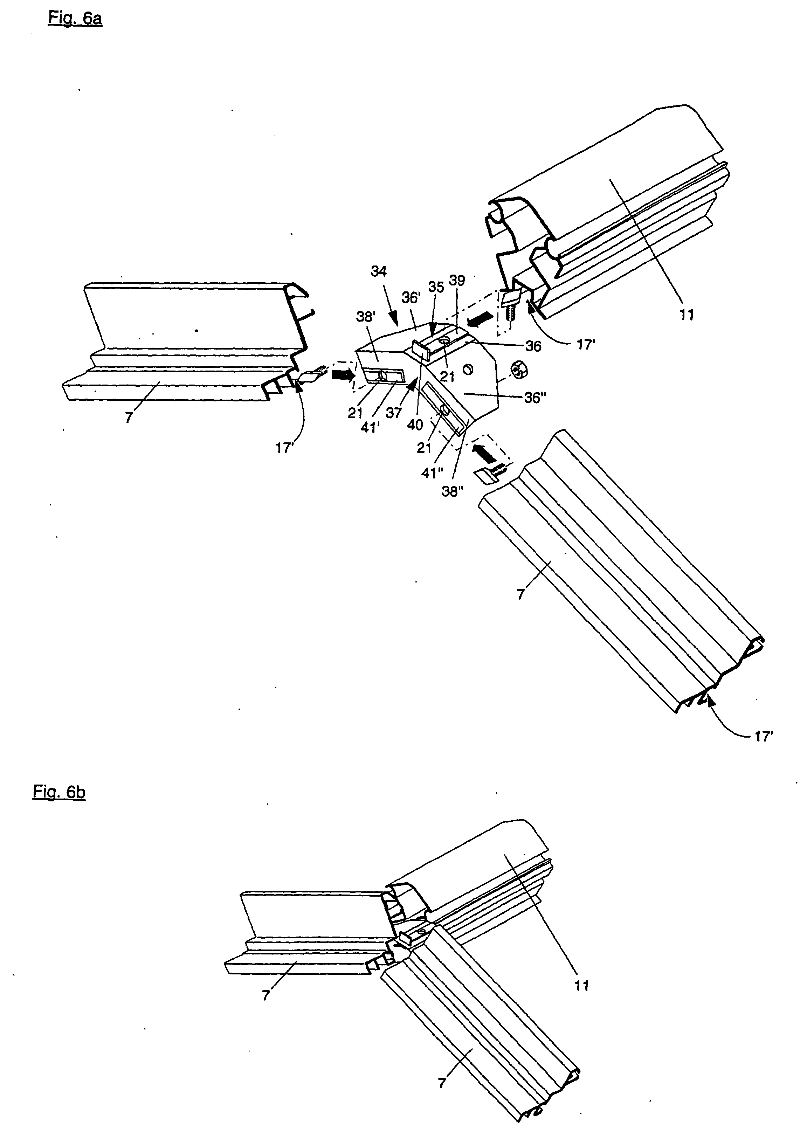

Fig. 6a zeigt den Ausschnitt E von Fig. 1 in vergrößerter Explosionsdarstellung und verdeutlicht den Einsatz eines dachseitigen Eckverbindungselementes 34 zum Verbinden zweier Giebelprofilelemente 7 untereinander und mit einem Firstprofilelement 7. Das dachseitige Eckverbindungselement 34 weist eine Basisplatte 35 mit einem mittleren Schenkel 36 und zwei abgewinkelten Schenkeln 36',36'' sowie eine Seitenplatte 37 auf. Die Seitenplatte 37 ist rechtwinklig zu den Schenkeln 36,36',36" der Basisplatte 35 und umfaßt zwei Schenkel 38',38''. Der mittlere Schenkel 36 der Basisplatte 35 weist eine vorspringenden Ansatz 39 auf, der in Längsrichtung des mittleren Schenkels 36 verläuft und in Richtung der Seitenplatte 37 in ein Anschlagelement 40 mündet. Ebenso weisen die zwei Schenkel 38' bzw. 38'' in ihrer Längsrichtung verlaufende vorspringende Ansätze 41' bzw. 41'' auf. Alle drei vorspringenden Ansätze 39,41',41'' sind jeweils von einer Bohrung 21 unterbrochen. In die Führungsschienen 17' der Giebelprofilelemente 7 und des Firstprofilelementes 11 sind die bereits in Fig. 2a gezeigten Verbindungselemente 23 eingesetzt, wobei sich die Schäfte, die aus den Führungsschienen 17' der Giebelprofilelemente 7 herausragen, in jeweils eine Bohrung 21 erstrecken, die einen auf der Seitenplatte 37 vorspringenden Ansatz 41' oder 41'' unterbricht. Beim Verschrauben mit Schraubenmuttern 19 senken sich die vorspringenden Ansätze 41',41'' in die Durchbrüche der Führungsschienen 17' und gewährleisten die Verdrehsicherheit. Die Enden der Giebelprofilelemente 6 sollten an die Seiten des Anschlagelementes 40 anstoßen. Der Gewindeschaft, der aus der Führungsschiene 17' des Firstprofilelementes 11 ragt, erstreckt sich durch eine der Bohrungen 21, die den vorspringenden Ansatz 39 auf dem mittleren Schenkel 36 der Basisplatte 35 unterbricht. Beim Verschrauben mit einer Schraubenmutter 19 senkt sich der vorspringende Ansatz 39 in den Durchbruch der Führungsschiene 17' und gewährleistet die Verdrehsicherheit. Auch das Firstprofilelement 11 sollte an das Anschlagelement 40 angrenzen.

Fig. 6b zeigt den Ausschnitt E von Fig. 1 in vergrößerter Darstellung bzw. die zusammengesetzten Bauteile aus Fig. 6a. Die Giebelprofilelemente 7 und das Firstprofilelement 11 nehmen die durch das dachseitige Eckverbindungselement 34 genau definierte Lage zueinander ein.

Fig. 7a zeigt den Ausschnitt F von Fig. 1 in vergrößerter Explosionsdarstellung und verdeutlicht den Einsatz eines dachseitigen Eckverbindungselementes 34 zum Verbinden zweier Giebelprofilelemente 7 untereinander und mit einem Abflußprofilelement 7. Das dachseitige Eckverbindungselement 34 weist eine Basisplatte 35 mit einem mittleren Schenkel 36 und zwei abgewnkelten Schenkeln 36',36" sowie eine Seitenplatte 37 auf. Die Seitenplatte 37 ist rechtwinklig zu den Schenkeln 36,36',36" der Basisplatte 35 und umfaßt zwei Schenkel 38',38''. Der mittlere Schenkel 36 der Basisplatte 35 weist eine vorspringenden Ansatz 39 auf, der in Längsrichtung des mittleren Schenkels 36 verläuft und in Richtung der Seitenplatte 37 in ein Anschlagelement 40 mündet. Ebenso weisen die zwei Schenkel 38' bzw. 38'' in ihrer Längsrichtung verlaufende vorspringende Ansätze 41' bzw. 41'' auf. Alle drei vorspringenden Ansätze 39,41',41'' sind jeweils von einer Bohrung 21 unterbrochen. In die Führungsschienen 17' bzw. 27' der Giebelprofilelemente 7 bzw. des Abflußprofilelementes 10 sind die bereits in Fig. 2a gezeigten Verbindungselemente 23 eingesetzt, wobei sich die Schäfte, die aus den Führungsschienen 17' der Giebelprofilelemente 7 herausragen, in jeweils eine Bohrung 21 erstrecken, die einen auf der Seitenplatte 37 vorspringenden Ansatz 41' oder 41'' unterbricht. Beim Verschrauben mit Schraubenmuttern 19 senken sich die vorspringenden Ansätze 41',41'' in die Durchbrüche der Führungsschienen 17' und gewährleisten die Verdrehsicherheit. Die Enden der Giebelprofilelemente 7 sollten an die Seiten des Anschlagelementes 40 anstoßen. Der Gewindeschaft, der aus der Führungsschiene 27' des Abflußprofilelementes 10 ragt, erstreckt sich durch eine der Bohrungen 21, die den vorspringenden Ansatz 39 auf dem mittleren Schenkel 36 der Basisplatte 35 unterbricht. Beim Verschrauben mit einer Schraubenmutter 19 senkt sich der vorspringende Ansatz 39 in den Durchbruch der Führungsschiene 27' und gewährleistet die Verdrehsicherheit. Auch das Abflußprofilelement 10 sollte an das Anschlagelement 40 angrenzen.

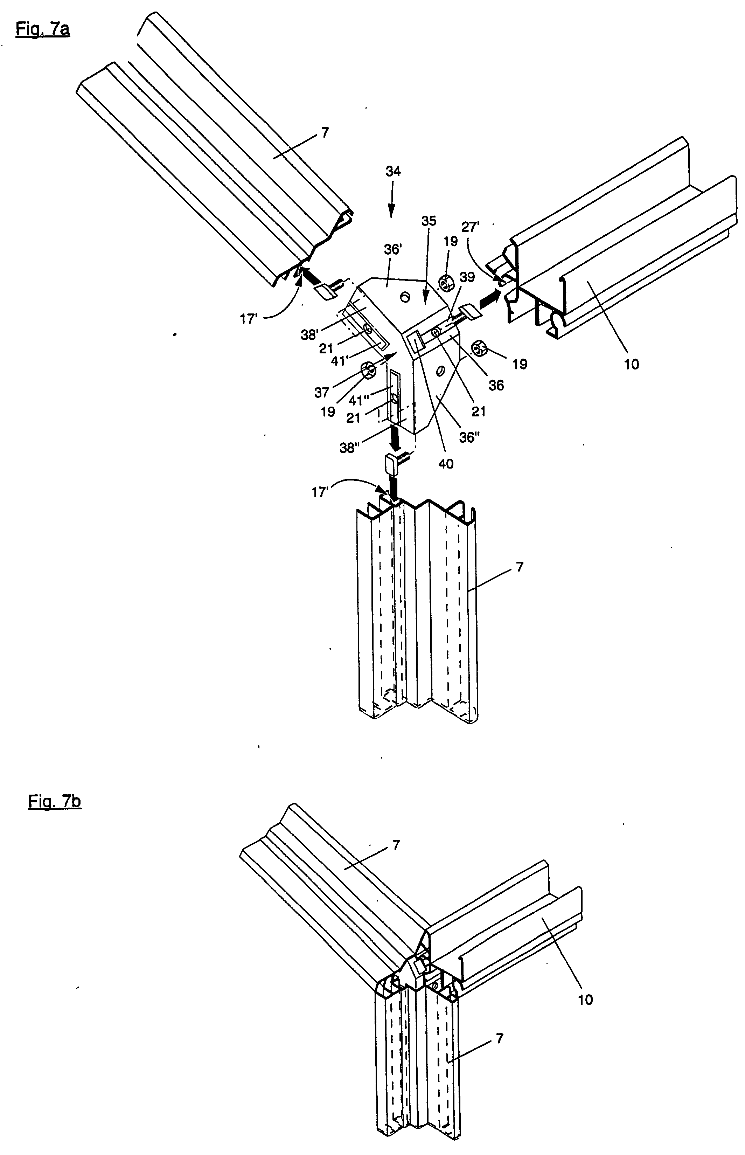

Fig. 7b zeigt den Ausschnitt F von Fig. 1 in vergrößerter Darstellung bzw. die zusammengesetzten Bauteile aus Fig. 7a. Die Giebelprofilelemente 7 und das Abflußprofilelement 10 nehmen die durch das dachseitige Eckverbindungselement 34 genau definierte Lage zueinander ein.

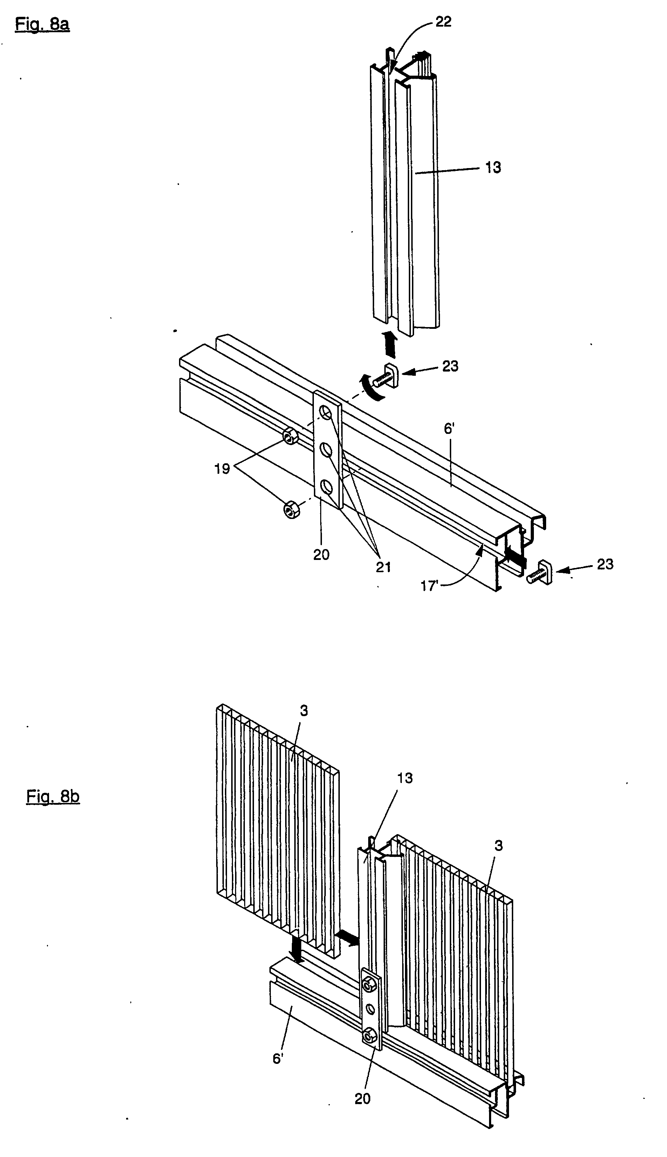

Fig. 8a zeigt den Ausschnitt G von Fig. 1 in vergrößerter Explosionsdarstellung. Im Gegensatz zu Fig. 2a wird das Strebenprofilelement 13 in Fig. 8a nicht an der Verbindungsstelle zwischen zwei Bodenprofilsegmenten 6',6'', sondern an einer beliebigen Stelle an einem Bodenprofilsegment 6' angebracht. In die Führungsschiene 22 des Strebenprofilelements 13 und in die Führungsschiene 17' des Bodenprofilsegmentes 6' werden die bereits in Fig. 2a gezeigten Verbindungselemente 23 eingesetzt. Nach dem rechtwinkligen Anordnen des Strebenprofilelementes 13 und des Bodenprofilsegmentes 6' kommt die gerade Verbindungsplatte 20 zum Einsatz, die drei Bohrungen 21 aufweist. Die Verbindungplatte 20 wird mit jeweils einer endseitigen Bohrung 21 auf die aus den Führungsschienen 22,17' ragenden Gewindeschäfte der Verbindungselemente 23 gesteckt und anschließend verspannt.

Fig. 8b zeigt den Ausschnitt G von Fig. 1 in vergrößerter Darstellung bzw. die zusammengesetzten Bauteile aus Fig. 8a. Das Strebenprofilelement 13 weist unter Ausbildung eines rechten Winkels mit dem Bodenprofilsegment 6'nach oben. Des weiteren sind transparente Platten 3 angedeutet, die in die Strebenprofilelemente 13 und das Bodenprofilsegment 6' einsetzbar sind.

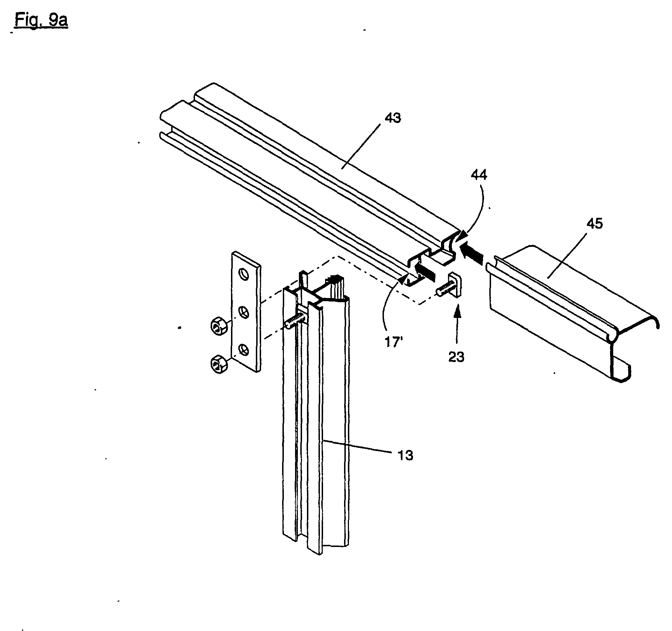

Fig. 9 zeigt den Ausschnitt H von Fig. 1 in vergrößerter Explosionsdarstellung (ohne Schiebetür). Zur Anbringung einer Schiebetür 42 im Teilgerüst 4 für die Vorderseite des Gewächshauses 10 ist es notwendig, zwei Strebenprofilelemente 13 senkrecht an dem Bodenprofilelement 6 des Teilgerüstes 4 anzubringen, wobei deren obere Enden mit einem Querstrebenprofilelement 43 verbunden sind, die sich bis zu beiden oder nur zu einer den Seiten des Teilgerüstes 4 erstrecken und zwei oder eine Schiebetür aufnehmen können (siehe Fig.1 bzw. 1a). Fig. 9 zeigt, daß das Strebenprofilelement 13, das die eine seitliche Begrenzung der Türöffnung darstellt, mit dem Querstrebenprofilelement 43, das die obere Begrenzung der Türöffnung darstellt, in der Art verbunden ist. die bereits in Fig. 8a und 8b beschrieben wurde. Das Querstrebenprofilelement 43 weist neben der Führungsschiene 17' zur Aufnahme des Verbindungselementes 23 eine weitere Führungsschiene 44 auf in die eine Türträgerprofilelement 45 einschiebbar ist, wobei die untere Seite des Türträgerprofilelementes 45 hakenförmig ausgebildet ist.

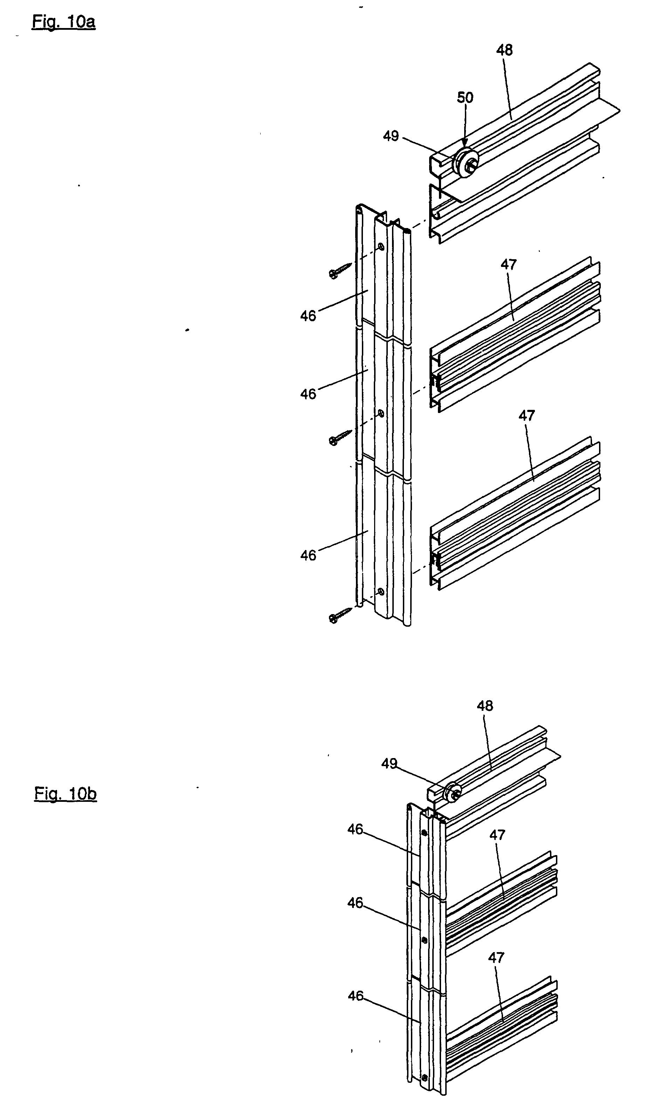

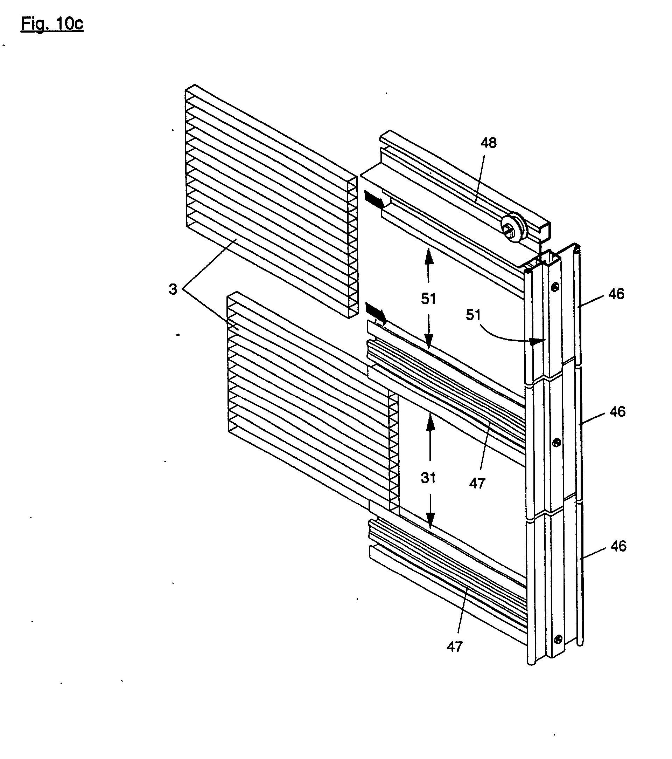

Fig. 10a zeigt eine Explosionsdarstellung eines Teilgerüstes für eine Schiebetür. Die Schiebetür setzt sich an deren beiden Seiten aus mehreren hintereinanderliegenden, vertikalen Türprofilelementen 46, zwischen denen horizontale Türprofilelemente 47 verschraubt sind. Das obere Türprofilelement 48 weist außerdem Rollen 49 mit einer umlaufenden Nut 50 an deren Umfangsseite auf.

Fig. 10b zeigt eine Darstellung des Teilgerüstes für eine Schiebetür aus Fig. 10a im zusammengesetzten Zustand.

In Fig. 10c wird gezeigt, wie die transparenten Platten 3 in Nuten 51 der vertikalen und horizontalen Türprofilelemente 46,47 eingeschoben werden können.

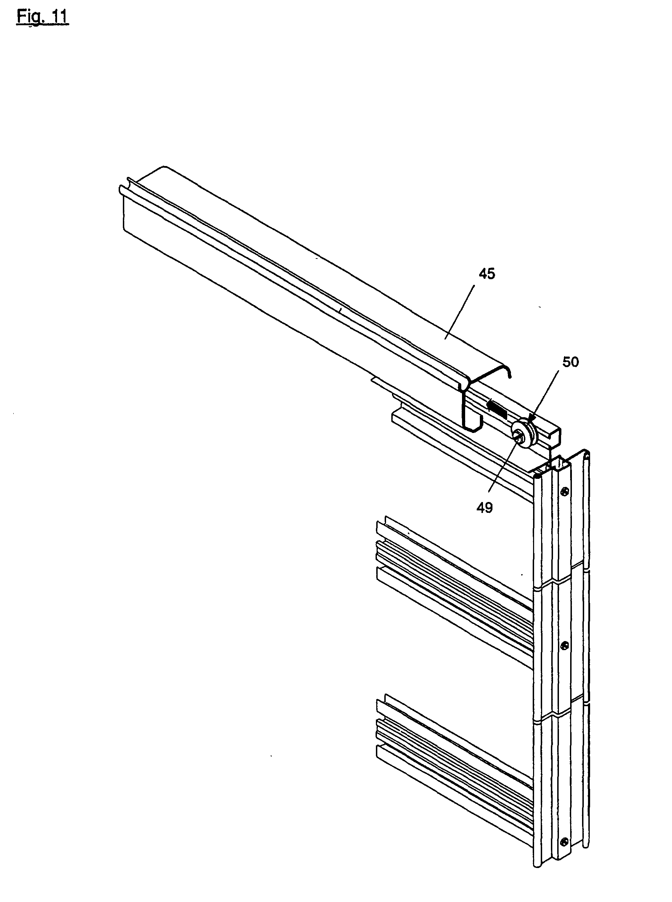

Fig. 11 zeigt, daß die Rollen 49 im eingehängten Zustand der Schiebetür mit ihren umlaufenden Nuten 50 auf dem hakenförmigen unteren Teil des Türträgerprofilelements 45 aufliegen und auf diesem abrollen.

## Patentansprüche

1. Bauteilset für den Zusammenbau eines eine Vorderwand, eine Rückwand, zwei Seitenwände und ein Dach aufweisenden Gewächshauses, das aus Profilelementen zusammensetzbar ist, die zu einem Gerüst (2) verbindbar sind, in das transparente Platten (3) einsetzbar sind, wobei wenigstens einige der Profilelemente als Führungsschienen (17', 27', 17", 27") ausgebildete Hohlprofile aufweisen, **dadurch gekennzeichnet, dass** die Profilelemente mit den Führungsschienen (17', 27', 17", 27") aus wenigstens zwei Profilsegmenten (6', 6", 10', 10", 11', 11") zusammensetzbar sind, wobei die Profilsegmente (6', 6", 10', 10", 11', 11") durch Längsverbindungselemente (15) verbindbar sind, die jeweils in die Enden der Schienen zweier hintereinanderliegender Profilsegmente (6', 6", 10', 10", 11', 11") einschiebbar und mit diesen verspannbar sind.

2. Bauteilset nach Anspruch 1, **dadurch gekennzeichnet, dass** die Längsverbindungselemente (15) einen Flachprofilkörper (16) aufweisen, dessen Breite nur geringfügig kleiner als die Breite der Führungsschienen (17', 27', 17", 27") der Profilelemente ist, wobei auf einer Seite des Flachprofilkörpers (16) mindestens zwei Gewindeschäfte (18', 18", 18''') zur Aufnahme von Schraubenmuttern (19) senkrecht angeordnet sind.

3. Bauteilset nach einem der Ansprüche 1 oder 2, **dadurch gekennzeichnet, dass** Eckverbindungselemente (28, 34) zum Verbinden von den Profilelementen mit den Führungsschienen (17', 17", 27', 27") enthalten sind, die auf ihren an die Profilelemente angrenzenden Seiten vorspringende Ansätze (30', 30", 31', 31") aufweisen, die in die Führungsschienen (17', 27', 17", 27") der Profilelemente winkelgerecht einlegbar und mit den Profilelementen verspannbar sind.

4. Bauteilset nach Anspruch 3, **dadurch gekennzeichnet, dass** die Eckverbindungselemente (28) zum Verbinden von den Profilelementen mit den Führungsschienen (17', 27', 17", 27") als rechtwinklige Winkelelemente ausgebildet sind, deren Schenkel (29', 29") jeweils mindestens zwei vorspringende Ansätze (30', 30", 31', 31") aufweisen, von denen der eine Ansatz (30', 30") parallel zur Eckkante (32) des Winkelelements verläuft, während der andere Ansatz (31', 31") rechtwinklig zur Eckkante (32) des Winkelelements verläuft, wobei jeder Ansatz von mindestens einer Bohrung (21) unterbrochen ist.

5. Bauteilset nach Anspruch 3, **dadurch gekennzeichnet, dass** die Eckverbindungselemente (34) zum Verbinden von den Profilelementen mit den Führungsschienen (17', 27', 17", 27") eine Basisplatte (35) mit einem mittleren Schenkel (36) und zwei abgewinkelten Schenkeln (36', 36") sowie eine Seitenplatte (37) mit zwei Schenkeln (38', 38"), die rechtwinklig zu den angrenzenden Schenkeln (36, 36', 36") der Basisplatte (35) angeordnet sind, aufweisen, wobei der mittlere Schenkel (36) der Basisplatte (35) sowie die Schenkel (38', 38") der Seitenplatte (37) vorspringende Ansätze (39, 41', 41") aufweisen, die in Längsrichtung der Schenkel (36, 38', 38") verlaufen und durch Bohrungen (21) unterbrochen sind.

6. Bauteilset nach Anspruch 1, **dadurch gekennzeichnet, daß** Profilsegmente (11',11'') enthalten sind, die an ihrer Unterseite einen rechteckigen Hohlprofilabschnitt (55) aufweisen, dessen untere Längsseite zur Aufnahme von Verbindungselementen (15,23) durchbrochen ist, und an den Seiten weitere durchbrochene Hohlprofilabschnitte (56',56'',57',57'') zur Aufnahme der transparenten Platten aufweisen.

7. Bauteilset nach Anspruch 6, **dadurch gekennzeichnet, daß** die Hohlprofilabschnitte (56',56'') zur Aufnahme der transparenten Platten derart ausgebildet sind, daß die transparenten Platten mit Spiel einsetzbar sind.

8. Bauteilset nach Anspruch 1, **dadurch gekennzeichnet, daß** Profilsegmente (10',10'') enthalten sind, die einen im wesentlichen U-förmigen Abschnitt (58) aufweisen, so daß sich Flüssigkeit in dem Profilsegment (10',10'') sammeln kann, wobei an dem U-förmigen Abschnitt (58) durchbrochene Hohlprofilabschnitte (59,60,61,62) zur Aufnahme der transparenten Platten sowie zur Aufnahme von Längsverbindungselementen (15) vorgesehen sind.

9. Bauteilset nach Anspruch 1, **dadurch gekennzeichnet, daß** Profilsegmente (6',6'') enthalten sind, die nach oben durchbrochene Hohlprofilabschnitte (52) zur Aufnahme der transparenten Platten sowie durchbrochene Hohlprofilabschnitte zur Aufnahme von Verbindungselementen (15,23) aufweisen, wobei im Hohlprofilabschnitt (52) zur Aufnahme der transparenten Platten ein horizontaler Steg (53) verläuft, auf dem die Platte abstützbar ist.

10. Bauteilset nach Anspruch 8 oder 9, **dadurch gekennzeichnet, daß** die Hohlprofilabschnitte (52,61) zur Aufnahme der transparenten Platten derart dimensioniert sind, daß das von den transparenten Platten abfließende Kondenswasser von den Hohlprofilabschnitten (52,61) aufnehmbar ist.

## Claims

1. Component set for the construction of a greenhouse including a front wall, a rear wall, two side walls and a roof, which can be assembled from profile elements connectable to form a framework (2) into which transparent plates (3) can be inserted, wherein at least some of said profile elements include hollow sections as guide rails (17', 27', 17", 27"), **characterized in that** said profile elements having said guide rails (17', 27', 17", 27") can be composed of at least two profile segments (6', 6", 10', 10", 11', 11"), wherein said profile segments (6', 6", 10', 10", 11', 11") are connectable by means of axial connection elements (15), which can be inserted into the ends of said rails of two of said profile segments lying one behind the other (6', 6", 10', 10", 11', 11") and can be tensioned with said profile segments.

2. Component set according to claim 1, **characterized in that** said axial connection elements (15) have a flat profile body (16), whose width is only slightly smaller than the width of said guide rails (17', 27', 17", 27") of said profile elements, wherein at least two thread shafts (18', 18", 18''') are arranged perpendicularly on one side of the flat profile body (16) to receive nuts (19).

3. Component set according to claim 1 or 2, **characterized in that** corner connection elements (28, 34) are provided for connecting said profile elements with said guide rails (17', 17", 27', 27"), having projections on the sides joining the profile elements (30', 30", 31', 31"), which can be inserted in angular alignment into said guide rails (17', 27', 17", 27") of said profile elements and which can be tensioned with said profile elements.

4. Component set according to claim 3, **characterized in that** said corner connection elements (28) for connecting said profile elements with said guide rails (17', 27', 17", 27") are designed as right-angled angular elements, whose shanks (29', 29") have at least two projections (30', 30", 31', 31"), one of said projection (30', 30") runs parallel to the corner flange (32) of said angular element, while the other projection (31', 31") runs right-angled to said corner flange (32) of said angular element, wherein each projection is interrupted by at least one bore (21).

5. Component set according to claim 3, **characterized in that** said corner connection elements (34) for connecting said profile elements with said guide rails (17', 27', 17", 27") comprise a base plate (35) with a middle shank (36) and two angled shanks (36', 36.") as well as a side plate (37) with two shanks (38', 38") which are arranged in a right angle with respect to the adjacent shanks (36, 36', 36") of said base plate (35), wherein said middle shank (36) of said base plate (35) as well as said shanks (38', 38") of said side plate (37) have projections (39, 41', 41") running parallel to the axial direction of said shanks (36, 38', 38") and being interrupted by bores (21).

6. Component set according to claim 1, **characterized in that** profile segments (11',11") are provided, including a rectangular hollow profile section (55) at their bottom side, whose lower longitudinal side is left open for receiving connection elements (15,23), and at the sides, have further opened hollow profile sections (56', 56", 57', 57") for receiving said transparent plates.

7. Component set according to claim 6, **characterized in that** said hollow profile sections (56', 56") are designed for receiving said transparent plates, such that there is a clearance for inserting said transparent plates.

8. Component set according to claim 1, **characterized in that** profile segments (10', 10") are provided with a substantially U-shaped section (58), so that a liquid can be collected in said profile segment (10', 10"), wherein opened hollow profile sections (59, 60, 61, 62) are provided at the U-shaped section (58) for receiving said transparent plates as well as for receiving axial connection elements (15).

9. Component set according to claim 1, **characterized in that** profile segments (6', 6") are provided, which comprise upwardly opened hollow profile sections (52) for receiving said transparent plates as well as opened hollow profile sections for receiving axial connection elements (15,23), wherein a horizontal bridge (53) runs in said hollow profile section (52) for receiving said transparent plates, on which said plate is supportable.

10. Component set according to claim 8 or 9, **characterized in that** said hollow profile sections (52, 61) are dimensioned for receiving said transparent plates in such a manner that condensation water flowing off from said transparent plates can be collected by said hollow profile sections (52,61).

## Revendications

1. Ensemble d'éléments de construction pour l'assemblage d'une serre comportant une paroi avant, une paroi arrière, deux parois latérales et un toit qui peut être assemblée à partir d'éléments profilés qui peuvent être raccordés à une charpente (2) dans laquelle des plaques transparentes (3) peuvent être insérées, moyennant quoi au moins quelques-uns des éléments profilés comportent des profilés creux configurés comme des rails de guidage (17', 27', 17", 27"), **caractérisé en ce que** les éléments profilés avec les rails de guidage (17', 27', 17", 27") peuvent être assemblés à partir d'au moins deux segments de profilés (6', 6", 10', 10", 11', 11"), moyennant quoi les segments de profilés (6', 6", 10', 10", 11', 11") peuvent être raccordés par les éléments de raccordement longitudinaux (15) qui peuvent être chacun glissés dans les extrémités des rails de deux segments de profilés (6', 6", 10', 10", 11', 11") disposés l'un derrière l'autre et qui peuvent être haubanés avec ceux-ci.

2. Ensemble d'éléments de construction selon la revendication 1, **caractérisé en ce que** les éléments de raccordement longitudinaux (15) présentent un élément de profilé plat (16) dont la largeur n'est que légèrement inférieure à la largeur des rails de guidage (17', 27', 17", 27") des éléments profilés, moyennant quoi au moins deux tiges filetées (18', 183, 18''') sont disposées verticalement sur un côté de l'élément de profilé plat (16) pour la réception d'écrous (19).

3. Ensemble d'éléments de construction selon la revendication 1 ou 2, **caractérisé en ce que** des éléments de raccordement d'angle (28, 34) sont prévus pour le raccordement des éléments profilés aux rails de guidage (17', 27', 17", 27") qui comportent, sur leurs côtés adjacents aux éléments profilés, des épaulements en saillie (30' , 30", 31' , 31") qui peuvent être insérés à angles droits dans les rails de guidage (17', 27', 17", 27") des éléments profilés et qui peuvent être haubanés avec les éléments profilés.

4. Ensemble d'éléments de construction selon la revendication 3, **caractérisé en ce que** les éléments de raccordement d'angle (28, 34) sont conçus, pour le raccordement des éléments profilés aux rails de guidage (17', 27', 17", 27"), comme des éléments d'angle rectangulaires dont les branches (29', 29") comportent chacun au moins deux épaulements en saillie (30', 30", 31', 31") dont un épaulement (30', 30") s'étend parallèlement à l'arête d'angle (32) de l'élément d'angle et l'autre épaulement (31', 31") s'étend à angles droits par rapport à l'arête d'angle (32) de l'élément d'angle, chaque épaulement étant interrompu par au moins un alésage (21).

5. Ensemble d'éléments de construction selon la revendication 3, **caractérisé en ce que** les éléments de raccordement d'angle (34) comportent, pour le raccordement des éléments profilés aux rails de guidage (17', 27', 17", 27"), une plaque de base (35) avec une branche médiane (36) et deux branches pliées en U (36', 36") ainsi qu'une plaque latérale (37) avec deux branches (38', 38") qui sont disposées à angles droits par rapport aux branches adjacentes (36, 36', 36") de la plaque de base (35), moyennant quoi la branche médiane (36) de la plaque de base (35) ainsi que la branche (38', 38") de la plaque latérale (37) comportent des épaulements en saillie (39, 41', 41") qui s'étendent dans le sens longitudinal des branches (36, 38', 38") et qui sont interrompus par des alésages (21).

6. Ensemble d'éléments de construction selon la revendication 1, **caractérisé en ce qu'**il comprend des segments profilés (11', 11") qui comportent, à leur face inférieure, un tronçon de profilé creux rectangulaire (55) dont le côté long inférieur est percé pour la réception d'éléments de raccordement (15, 23) et qui comportent, sur les côtés, d'autres tronçons de profilés creux percés (56' , 56" , 57' , 57") pour la réception des plaques transparentes.

7. Ensemble d'éléments de construction selon la revendication 6, **caractérisé en ce que** les tronçons de profilés creux (56', 56") sont conçus pour la réception des plaques transparentes de telle manière que les plaques transparentes peuvent être insérées avec un jeu.

8. Ensemble d'éléments de construction selon la revendication 1, **caractérisé en ce qu'**il comprend des segments profilés (10', 10") qui comportent un tronçon (58) sensiblement en forme de U de sorte que le liquide peut s'accumuler dans le segment profilé (10', 10"), moyennant quoi des tronçons de profilés creux (59, 60, 61, 62) percés sont prévus dans le tronçon en forme de U (58) pour la réception des plaques transparentes ainsi que pour la réception d'éléments de raccordement longitudinaux (15).

9. Ensemble d'éléments de construction selon la revendication 1, **caractérisé en ce qu'**il comprend des segments profilés (6', 6") qui comportent des tronçons de profilés creux (52) percés vers le haut pour la réception des plaques transparentes ainsi que des tronçons de profilés creux percés pour la réception d'éléments de raccordement (15, 23), moyennant quoi une nervure horizontale (53), sur laquelle la plaque peut s'appuyer, s'étend dans le tronçon de profilé creux (52) pour la réception des plaques transparentes.

10. Ensemble d'éléments de construction selon la revendication 8 ou 9, **caractérisé en ce que** les tronçons de profilés creux (52, 61) pour la réception des plaques transparentes sont dimensionnés de telle manière que l'eau condensée s'écoulant des plaques transparentes peut être collectée par les tronçons de profilés creux (52, 61) .
